# EUROPEAN PATENT APPLICATION

(11) **EP 1 376 564 A2**
(43) Date of publication of application: **02.01.2004**
(21) Application number: 03254050.2
(22) Date of filing: 26.06.2003
(51) Int. Cl.: G11B 7/24

(54) **Optical recording medium**

(30) Priority: 26.06.2002 JP 2002185544
(71) Applicant: Fuji Photo Film Co., Ltd., Kanagawa (JP)
(72) Inventor: Shibata, Michihiro, Fuji Photo Film Co., Ltd, Odawara-shi, Kanagawa (JP)
(74) Representative: Stevens, Jason Paul

(57) **Abstract**

The optical recording medium (10,10a,10b) is a laminated optical recording medium in which at least a reflective layer and an adhesive layer are laminated in this order on a transparent substrate having a center hole (12) and on an outer side of a circumference of the center hole (12). In detail, the present invention provides an optical recording medium (10,10a,10b) in which one adhesive layer is formed on a portion of a substrate having a center hole (12), wherein the portion resides between an edge portion of the center hole (12) and whichever of an inner circumferential portion of a region having the reflective layer formed thereon and an inner circumferential portion of a region having the first adhesive layer formed thereon is closer to the center hole (12). The optical recording medium (10,10a,10b) of the present invention has a high lamination strength, and a better appearance.

## Description

### CROSS-REFERENCE TO RELATED APPLICATIONS

This application claims benefit of and priority to Japanese Patent Application No. 2002-185544, filed on June 26, 2002, which is incorporated herein by reference in its entirety for all purposes.

### BACKGROUND OF THE INVENTION

### Field of Invention

The present invention relates to a laminated optical recording medium.

### Description of the Related Art

Hitherto, an optical recording medium (optical disk) which can record and reproduce information with the laser light has been known. A representative structure of this optical disk is a structure in which a recording layer, a reflective layer composed of a metal such as gold and the like, an adhesive layer, and a protecting layer (cover layer) made of a resin are laminated in this order on a transparent disk-like substrate. Regarding the adhesive layer, there are problems on its function and appearance, and various proposals have hitherto been made.

Japanese Patent Application Laid-Open (JP-A) No. 10-199042 proposes an optical recording medium in which an adhesive layer for laminating a substrate is coated in the range from an outer circumferential portion of a functional layer corresponding to a recording layer or a reflective layer to an inner circumferential portion of the functional layer, and an adhesive is not seen from the outside by limiting a region of an adhesive layer to an opaque functional layer region. However, since an adhesive is not coated on an inner circumferential transparent region, the strength relative to falling of a disk is weak. In addition, when a center hole of a disk is set by fitting into a disk attaching part, or when it is detached, as in a portable playback machine, the force is applied so as to open a gap between two disks, and an adhesive is peeled to destruct the disk in some cases.

In addition, JP-A No. 10-149850 proposes an optical recording medium in which a margin region with no adhesive attached thereto is partially formed at a periphery of a center hole, whereby, an adhesive is prevented from coming out from a center hole and transferring to the surface of a disk. However, the strength of a disk is high, but since an adhesive is coated on an inner circumferential transparent portion and an adhesive region is seen from the outside, the disk has bad appearance.

In addition, JP-A No. 2001-118287 proposes an optical recording medium provided with a first disk in which a recording layer region is formed in a predetermined range of a region on a substrate having a center hole and the recording layer region is covered with a reflective layer, and a second disk in which at least a region corresponding to the recording layer region and a region which is to 6 mm or more inner from an inner circumference of the recording layer region is laminated on a first disk. By such a construction, it is difficult to form a reflective layer to an inner side.

Regarding an adhesive layer, there is currently proposed no optical recording medium having both the function (lamination strength) and the better appearance.

### SUMMARY OF THE INVENTION

One aspect of the present invention was done in view of the above-mentioned previous problems. The invention provides an optical recording medium having the high lamination strength and the better appearance.

The invention provides an optical recording medium, which comprises; a transparent substrate having a center hole; a reflective layer which is provided on the substrate at an outer side of a circumference of the center hole; a first adhesive layer which is provided on the reflective layer at an outer side of a circumference of the center hole; one of another substrate which is laminated on the adhesive layer and has a shape that is the same as that of the transparent substrate, and another layer having a shape that is substantially the same as that of the transparent substrate; and a second adhesive layer which is formed on a portion of the substrate, wherein the portion resides between an edge portion of the center hole and whichever of an inner circumferential portion of a region having the reflective layer formed thereon and an inner circumferential portion of a region having the first adhesive layer formed thereon is closer to the center hole.

In one embodiment, the second adhesive layer may be formed on one or more of partial portion(s) of the substrate, wherein the portion(s) reside between an edge portion of the center hole and whichever of an inner circumferential portion of a region having the reflective layer formed thereon and an inner circumferential portion of a region having the first adhesive layer formed thereon is closer to the center hole. However, it is preferable that the second adhesive layer is formed over an entire circumference of the center hole in contact with the circumference.

A width of the second adhesive layer (radial direction) is preferably in a range of 0.3 to 2.0 nm, more preferably in a range of 0.5 to 1.0 nm.

On the other hand, it is preferable that an adhesive constituting the first adhesive layer and the second adhesive layer is a slow-acting ultraviolet ray-curable adhesive.

In addition, it is preferable that the first adhesive layer and the second adhesive layer are formed by screenprinting.

### BRIEF DESCRIPTION OF THE DRAWINGS

Fig.1 is a top view showing an adhesive layers-forming region in an optical recording medium of the present invention.
Fig. 2 is a top view showing another embodiment of the optical recording medium of Fig. 1.
Fig. 3 is a top view showing a still another embodiment of the optical recording medium of Fig. 1.

### DETAILED DESCRIPTION OF THE INVENTION

An optical recording medium of the present invention is an optical recording medium, which comprises; a transparent substrate having a center hole; a reflective layer which is provided on the substrate at an outer side of a circumference of the center hole; a first adhesive layer which is provided on the reflective layer at an outer side of a circumference of the center hole; one of another substrate which is laminated on the adhesive layer and has a shape that is the same as that of the transparent substrate, and another layer having a shape that is substantially the same as that of the transparent substrate; and a second adhesive layer which is formed on a portion of the substrate, wherein the portion resides between an edge portion of the center hole and whichever of an inner circumferential portion of a region having the reflective layer formed thereon and an inner circumferential portion of a region having the first adhesive layer formed thereon is closer to the center hole.

Regarding the optical recording medium of the invention, an example of an embodiment having a recording layer, a reflective layer, a protecting layer and an adhesive layer on a substrate will be explained below.

### Substrate

As a substrate, various materials which are used as a substrate material of the conventional optical recording medium can be arbitrarily selected and used as far as they are a transparent substrate having a center hole.

Specifically, there are a glass; a polycarbonate; an acrylic resin such as polymethyl methacrylate and the like; a vinyl chloride resin such as polyvinyl chloride, vinyl chloride copolymer and the like; an epoxy resin; an amorphous polyolefin; a polyester; a metal such as aluminium and the like; and the like. If desired, these may be used jointly. In addition, a material for a first substrate and a material for a second substrate may be the same or different.

Among the above-mentioned materials, from a viewpoint of the resistance to humidity, the dimensional stability and the low cost, polycarbonates and amorphous polyolefins are preferable, and polycarbonates are particularly preferable. In addition, it is preferable that a thickness of a substrate is in a range of 0.5 to 1.4 mm.

A center hole having a diameter of 15 mm, and a guide groove for tracking or irregularities representing information such as address signal and the like (pre-groove) are formed on a substrate. A track pitch of a pre-groove is preferably in a range of 400 to 900 nm, more preferably in a range of 450 to 850 nm, further preferably in a range of 500 to 800 nm. In addition, a depth of a pre-groove (groove depth) is preferably in a range of 80 to 180 nm, more preferably in a range of 100 to 170 nm, further preferably in a range of 110 to 160 nm. Further, a half band width of a pre-groove is preferably in a range of 200 to 400 nm, more preferably 230 to 380 nm, further preferably in a range of 250 to 350 nm.

In addition, for the purpose of improving the flatness and the adhering force and preventing degeneration of a recording layer, an undercoat layer can be provided on the surface of a substrate on a side on which a recording layer is provided. Examples of a material for an undercoat layer include polymer materials such as polymethyl methacrylate, acrylic acid/methacrylic acid copolymer, styrene/maleic anhydride copolymer, polyvinyl alcohol, N-methylolacrylamide, styrene/vinyltoluene copolymer, chlorosulfonated polyethylene, nitrocellulose, polyvinyl chloride, chlorinated polyolefin, polyester, polyimide, vinyl acetate/vinyl chloride copolymer, ethylene/vinyl acetate copolymer, polyethylene, polypropylene, polycarbonate and the like; surface modifiers such as silane coupling agent. An undercoat layer may be formed by dissolving or dispersing the above-mentioned material in a suitable solvent to prepare a coating solution, and coating the coating solution on the surface of a substrate utilizing a coating method such as a spin coating, a dip coating and an extrusion coating. A thickness of an undercoat layer is generally in a range of 0.005 to 20 µm, preferably in a range of 0.01 to 10 µm.

### Recording layer

In a recording layer, generally, in the case of a write-once-read-many optical recording medium, a dye is used and, in the case of a rewritable optical recording medium, a phase changing metal is used. In the case of a write-once-read-many optical recording medium, that is, in the case of use of a dye, examples of an usable dye include a cyanine dye, a phthalocyanine dye, an imidazoquinoxaline dye, a pyrylium/thiopyrylium dye, an azulenium dye, a squarylium dye, a metal (e.g. Ni, Cr) complex salt dye, a naphthoquinone dye, an anthraquinone dye, an indophenol dye, an indoaniline dye, a triphenylmethane dye, a merocyanine dye, an oxonol dye, an aminium/diimmonium dye and a nitroso compound. Among these dyes, a cyanine dye, a phthalocyanine dye, an azulenium dye, a squarylium dye, an oxonol dye and an imidazoquinoxaline dye are preferable.

Examples of a solvent of a coating solution for forming a recording layer include esters such as butyl acetate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as cyclohexane; ethers such as tetrahydrofuran, ethyl ether and dioxane; alcohols such as ethanol, n-propanol, isopropanol, n-butanol and diacetone alcohol; fluorine solvents such as 2,2,3,3-tetrafluoropropanol; glycol ethers such as ethylene glycol monomethyl ether, ethylene glycol monoethyl ether, and propylene glycol monomethyl ether. The above solvents may be appropriately used alone or by combining two or more in view of the solubility of a dye to be used. Preferable are fluorine solvents such as 2,2,3,3-tetrafluoropropanol. In addition, optionally, a fading preventing agent and a binding agent may be added to a coating solution and, further, various additives such as an antioxidant, a UV absorbing agent, a plasticizer and a lubricant may be added to the coating solution, depending on the purpose.

Representative examples of a fading preventing agent include a nitroso compound, a metal complex, an immonium salt and an aminium salt. These examples are described, for example, in JP-A Nos. 2-300288, 3-224793 and 4-146189.

Examples of a binding agent include natural organic polymer materials such as gelatin, cellulose derivative, dextran, rosin and rubber; synthetic organic polymers such as hydrocarbon resins such as polyethylene, polypropylene, polystyrene, polyisobutylene and the like, vinyl resins such as polyvinyl chloride, polyvinylidene chloride, polyvinyl chloride/polyvinyl acetate copolymer and the like, acrylic resins such as polymethyl acrylate, polymethylmethacrylate and the like, initial condensed materials of heat-curable resins such as polyvinyl alcohol, chlorinated polyethylene, epoxy resin, butyral resin, rubber derivative, phenol/formaldehyde resin and the like. When a binding agent is used, an amount of a binding agent to be used is generally in a range of 0.2 to 20 parts by weight, preferably in a range of 0.5 to 10 parts by weight, further preferably in a range of 1 to 5 parts by weight relative to 100 parts by weight of a dye.

In view of the solubility of a dye to be used, the above-mentioned solvents may be used alone or by combining two or more. Further, various additives such as an antioxidant, a ultraviolet ray absorber, a plasticizer, a lubricant and the like may be added to a coating solution, depending on the purpose.

Examples of a coating method include a spraying method, a spin coating method, a dip method, a roll coating method, a blade coating method, a doctor roll method, a screen printing method and the like. A recording layer may be a single layer or a multi-layer. In addition, when a dye is used, a thickness of a recording layer is generally in a range of 20 to 500 nm, preferably in a range of 30 to 300 nm, more preferably in a range of 50 to 100 nm.

In addition, a coating temperature is not problematic as far as it is in a range of 23 to 50°C, and it is preferably in a range of 24 to 40°C, more preferably in a range of 25 to 37°C

A recording layer may contain various fading preventing agents in order to improve the light resistance of the recording layer.

As a fading preventing agent, a singlet oxygen quencher is generally used. As a singlet oxygen quencher, the already known quenchers which are described in the publications such as the patent specifications and the like can be utilized.

Examples thereof include quenchers described in respective gazettes such as JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, 4-25492, Japanese Patent Application Publication (JP-B) Nos. 1-38680, and 6-26028 and the like, German Patent No. 350399 specification, and *Bulletin of Society of Japanese Chemistry,* 1992, No. October, pp.1141.

An amount of the fading preventing agent such as a singlet oxygen quencher and the like is usually in a range of 0.1 to 50% by weight, preferably in a range of 0.5 to 30% by weight, more preferably in a range of 1 to 20% by weight, particularly preferably in a range of 2 to 10% by weight relative to an amount of a compound for recording.

The above-mentioned explanation of the recording layer is in the case of a write-once-read-many optical recording medium, that is, in the case of use of a dye. In the case of a rewritable optical recording medium, that is, in the case of use of a phase changing metal, examples of the phase changing metal include Sb-Te alloy, Ge-Sb-Te alloy, Pd-Ge-Sb-Te alloy, Nb-Ge-Sb-Te alloy, Pd-Nb-Ge-Sb-Te alloy, Pt-Ge-Sb-Te alloy, Co-Ge-Sb-Te alloy, In-Sb-Te alloy, Ag-In-Sb-Te alloy, Ag-V-In-Sb-Te alloy, Ag-Ge-In-Sb-Te alloy and the like. Among them, Ge-Sb-Te alloy and Ag-In-Sb-Te alloy are preferable since many times rewriting is possible.

When a phase changing metal is used, a thickness of a recording layer is preferably in a range of 10 to 50 nm, more preferably in a range of 15 to 30 nm.

The above phase changing recording layer can be formed by a vapor film deposition method such as a vacuum deposition method, a sputtering method or the like.

### Reflective layer

A reflective layer is provided on a recording layer particularly for the purpose of improving a reflectivity at reproduction of information. A light reflecting material which is a material for a reflective layer is a material having a high reflectivity for the laser light, and examples thereof include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, as well as stainless steel. Among them, preferable are Cr, Ni, Pt, Cu, Ag, Au, Al and stainless steel. These materials may be used alone or by combining two or more. Alternatively, they may be used as an alloy. Particularly preferable are Au, Ag and an alloy thereof. A reflective layer may be formed on a recording layer, for example, by deposition, sputtering or ion plating of the light reflecting material. A thickness of a reflective layer is generally in a range of 10 to 800 nm, preferably in a range of 20 to 500 nm, further preferably in a range of 50 to 300 nm.

### Protecting layer

A protecting layer is formed in order to prevent a moisture from penetrating into the interior of an optical recording medium, is not particularly limited as far as it is a transparent material, and is preferably polycarbonate, ultraviolet ray-curable resin of the like, more preferably a material having a rate of moisture absorption at 230°C and 50% RH of 5% or smaller.

"Transparent" means that a material is transparent so that the light or the recording light and the reproducing light passes therethrough (transmittance: 90% or higher).

A thickness of a protecting layer is in a range of 1 to 30 µm, preferably in a range of 3 to 20 µm, more preferably in a range of 3 to 10 µm.

As an adhesive for adhering the reflective layer and the protecting layer, a photo-curable resin is preferable and, inter alia, in order to prevent warpage of a disk, a resin having a small curing shrinking rate is preferable. Examples of such the photo-curable resin include a UV-curable resin (UV-curable adhesive) such as "SD-640 (trade name)", "SD-347 (trade name)" and the like manufactured by Dainippon Ink and Chemicals, Incorporated. In order to endow with the elasticity, a thickness of an adhesive layer is preferably in a range of 1 to 1000 µm, more preferably in a range of 5 to 500 µm, particularly preferably in a range of 10 to 100 µm.

### Adhesive layer

An adhesive layer is a layer which is formed mainly in order to laminate the above-mentioned substrate and another substrate having the same shape, or the above-mentioned substrate and another layer having the substantially same shape. Another layer corresponds to a protecting layer, for example, when two disks are laminated.

It is preferable that an adhesive constituting an adhesive layer is a slow-acting ultraviolet ray-curable adhesive. When a slow-acting ultraviolet ray-curable adhesive is used, it is advantageous when a both side recording reproducing optical recording medium is manufactured. That is, in the case of a rapid-acting ultraviolet ray-curable adhesive, since ultraviolet-ray irradiated upon curing is reflected by a reflective layer, and ultraviolet-ray does not reach an adhesive, it is difficult to cure an adhesive. To the contrary, in the case of a slow-acting ultraviolet ray-curable adhesive, it is not difficult to cure an adhesive.

Examples of such the slow-acting ultraviolet ray-curable adhesive include a cation-curing ultraviolet ray-curable resin containing an epoxy resin as a main component thereof, specifically, "SK7000" manufactured by Sony Chemicals Corporation and "30Y-292G" manufactured by Threebond K.K. (all are trade names) . In addition, a thickness of an adhesive layer is preferably in a range of 1 to 1000 µm, more preferably in a range of 5 to 500 µm, particularly preferably in a range of 10 to 100 µm.

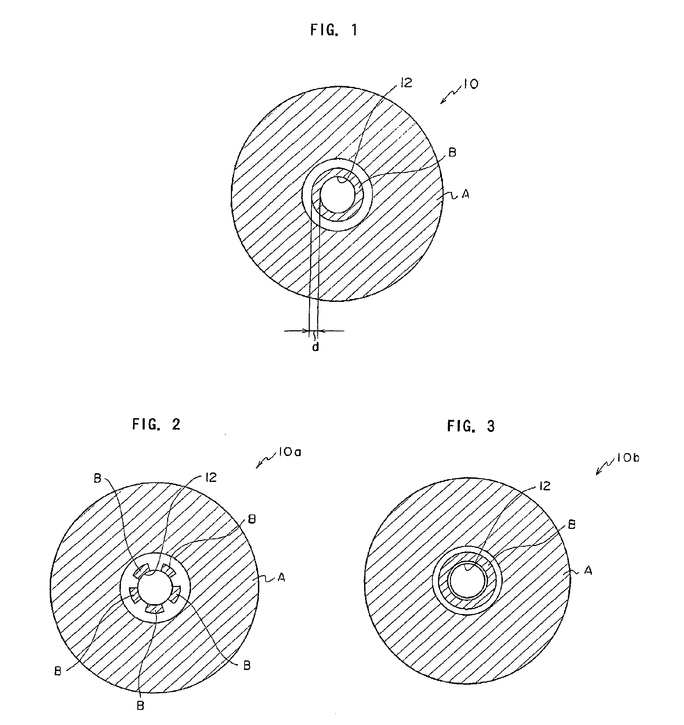

In the optical recording medium of the present invention, a second adhesive layer is formed on a portion of the substrate, wherein the portion resides between an edge portion of the center hole and whichever of an inner circumferential portion of a region having the reflective layer formed thereon and an inner circumferential portion of a region having the first adhesive layer formed thereon is closer to the center hole. Fig. 1 is a top view showing an adhesive layers-forming region of an optical recording medium 10. A hatching region A in Fig. 1 is a first adhesive layer formed in the same region as that of a reflective layer, and a hatching region B is a second adhesive layer. A second adhesive layer is formed in contact with a circumference of a center hole 12. A width (radial direction) of a second adhesive layer is preferably in a range of 0.3 to 2.0 mm, more preferably in a range of 0.5 to 1.0 mm.

By the above second adhesive layer, the laminating strength can be enhanced without deteriorating the appearance.

Then, two variations of an optical recording medium to which the present invention is applied are exemplified.

An optical recording medium 10a in Fig. 2 is different from the optical recording medium in Fig. 1 in that a second adhesive layer is partially formed. An optical recording medium 10b in Fig. 3 is different from the optical recording medium in Fig. 1 in that a second adhesive layer is formed between an inner circumference of a first adhesive layer and a circumference of a center hole. In any embodiments of Fig. 2 and Fig. 3, the laminating strength can be enhanced without deteriorating the appearance.

It is preferable that the above adhesive layers (first adhesive layer and second adhesive layer) are formed, for example, by printing an adhesive on regions of hatching regions A and B in Figs. 1 to 3 by screen printing. By screen printing, an adhesive layer region of hatching regions A and B in Figs. 1 to 3 can be easily formed compared with the case of coating the adhesive.

The optical recording medium having a recording layer has been explained, the invention is not limited to it, and can be also applied to so-called CD-ROM and DVD-ROM having no recording layer.

### EXAMPLES

Examples of the present invention will be explained in detail below, but the invention is not limited to them.

### Example 1

Using an injection molding machine (manufactured by Sumitomo Heavy Industries, Ltd.), a polycarbonate resin was formed on a substrate having a thickness of 0.6 mm and a diameter of 120 mm which had a spiral groove (depth: 156 nm, width: 290 nm, track pitch: 0.74 µm) .

A solution obtained by dissolving 2.0 g of the following dye A in 100 cm² of 2,2,3,3- tetrafluoropropanol was coated on a surface of the substrate on which a groove was formed by a spin coating method, to form a recording layer having a thickness of 100 nm. Then, silver was laminated on the recording layer at about 150 nm by sputtering, to form a reflecting layer. Upon this, a reflective layer forming region was such that an inner circumferential portion had a diameter of 27 mm, and an outer circumferential portion had a diameter of 118 nm. Further, an ultraviolet-ray curing overcoating agent (trade name: Dicure Clear SD-640, manufactured by Dainippon Ink and Chemicals, Incorporated) was coated on this reflective layer by a spin coating method, ultraviolet-ray was irradiated by a metal halide lamp to form a protecting layer of about 20 µm, to obtain a disk A having a thickness of 0.6 mm.

Similarly, silver was sputtered on the substrate without coating a dye, and a protecting layer was formed thereon to obtain a disk B with no recording layer having a thickness of 0.6 mm.
Dye A (containing the components in a mixing ratio of

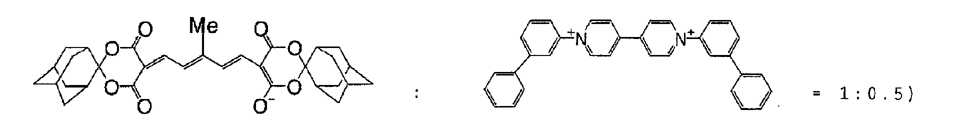

In order to laminate the disk A and the disk B to complete one disk, the following step was effected. First, a slow-acting cation polymerizing adhesive (trade name: SK7000, manufactured by Sony Chemicals Corporation) was printed on protecting layers of the disk A and the disk B by screen printing, to form a hatching region (width d: 1.0 mm) shown in Fig. 1. Upon this, a mesh size for a screen printing plate, 300 mesh was used. Then, ultraviolet-ray was irradiated by employing a metal halide lamp and, immediately after, respective protecting layer sides of the disk A and the disk B were laminated, and compressed from both sides. After allowing to stand for about 5 minutes, an adhesive was completely cured to obtain a disk (optical recording medium) of Example 1 having a thickness of 1.2 mm.

### Comparative Example 1

According to the same manner as that of Example 1 except that an adhesive layer at a periphery of center hole was not formed, a disk (optical recording medium) of Comparative Example 1 was made.

### Assessment of disks

### (1) Falling test

Three disks of Example 1 and Comparative Example 1 were made, each disk was fallen vertically on a stainless plate having a thickness of 20 mm from a height of 10 cm, to confirm the presence or the absence of peeling of a disk. This was repeated, falling times until occurrence of peeling are counted for each disk. Not only when two disks (disk A and disk B) were completely peeled, but also when partial peeling occurred and peeling was extended to a part on which a recording layer was formed, it was regarded to be "presence of peeling". The results are shown in Table 1.

**Table 1**

| | First disk | Second disk | Third disk |
|---|---|---|---|
| Example 1 | >50 | >50 | >50 |
| Comparative Example | 1 3 | 2 | 2 |

From table 1, it can be seen that, in the case of disks of Example 1, no peeling occurred even when they were fallen 50 times, while in the case of disks of Comparative Example 1, peeling occurred at two or three times of fallings.

### (2) Test of durability in repetition of attachments to reproducing machine

Against disks of Example 1 and Comparative Example 1, attachment and detachment were repeated 100 times on an attachment part of a portable reproducing machine (in which a center hole of a disk was fitted into an attaching part), to confirm peeling of a disk. In the case of disks of Example 1, no peeling occurred even when attachment and detachment were repeated 100 times, while in the case of disks of Comparative Example 1, peeling occurred at an interface between a reflective layer and a recording layer.

From the above Example 1 and Comparative Example 1, the optical recording medium of the invention had the high laminating strength, the narrow second adhesive layer region, and the better appearance.

According to the invention, an optical recording medium having the high laminating strength, and the better appearance can be provided.

## Claims

1. An optical recording medium, which comprises;
a transparent substrate having a center hole;
a reflective layer which is provided on the substrate at an outer side of a circumference of the center hole;
a first adhesive layer which is provided on the reflective layer at an outer side of a circumference of the center hole;
one of another substrate which is laminated on the adhesive layer and has a shape that is the same as that of the transparent substrate, and another layer having a shape that is substantially the same as that of the transparent substrate; and
a second adhesive layer which is formed on a portion of the substrate, wherein the portion resides between an edge portion of the center hole and whichever of an inner circumferential portion of a region having the reflective layer formed thereon and an inner circumferential portion of a region having the first adhesive layer formed thereon is closer to the center hole.

2. An optical recording medium according to claim 1, wherein a width of the second adhesive layer in a radial direction thereof is in a range of 0.3 to 2.0 mm.

3. An optical recording medium according to claim 1, wherein a width of the second adhesive layer in a radial direction thereof is in a range of 0.5 to 1.0 mm.

4. An optical recording medium according to claim 1, wherein an adhesive constituting the first adhesive layer and the second adhesive layer is a slow-acting ultraviolet ray-curable adhesive.

5. An optical recording medium according to claim 1, wherein an adhesive constituting first adhesive layer and second adhesive layer is a cation-curing ultraviolet ray-curable resin containing an epoxy resin as a main component thereof.

6. An optical recording medium according to claim 1, wherein each of a thickness of the first adhesive layer and a thickness of the second adhesive layer is in a range of 1 to 1000 µm.

7. An optical recording medium according to claim 1, wherein each of a thickness of the first adhesive layer and a thickness of the second adhesive layer is in a range of 5 to 500 µm.

8. An optical recording medium according to claim 1, wherein each of a thickness of the first adhesive layer and a thickness of the second adhesive layer is in a range of 10 to 100 µm.

9. An optical recording medium according to claim 1, wherein the first adhesive layer and the second adhesive layer are formed by screen printing.

10. An optical recording medium according to claim 1, wherein the substrate comprises a polycarbonate or an amorphous polyolefin.
